# EUROPEAN PATENT APPLICATION

(11) **EP 4 275 495 A2**
(43) Date of publication of application: **15.11.2023**
(21) Application number: 22717851.4
(22) Date of filing: 09.03.2022
(51) Int. Cl.: A01N 63/30, A01P 1/00, A01P 3/00

(54) **USE OF A COMPOSITION OBTAINED FROM MICROORGANISMS**

(30) Priority: 12.03.2021 ES 202130218
(71) Applicant: Timac Agro España, S.A., 31160 Orcoyen, Navarra (ES); Consejo Superior De Investigaciones Científicas (CSIC), 28006 Madrid (ES)
(72) Inventor: POZUETA ROMERO, Francisco Javier, 29750 Algarrobo, Málaga (ES); BAROJA FERNÁNDEZ, Miren Edurne, 31192 Mutilva Baja, Navarra (ES); MUÑOZ PÉREZ, Francisco José, 31192 Mutilva Baja, Navarra (ES)
(74) Representative: Carlos Hernando, Borja
(86) International application number: PCT/ES2022/070136
(87) International publication number: WO 2022/189690

(57) **Abstract**

The present invention relates to compositions obtained from the culture of microorganisms and the subsequent elimination of said cultures of microorganisms from the culture medium, and to the use of said compositions for the modification of the microbiota of substrates.

## Description

The present invention relates to compositions obtained from microorganisms and the use thereof for the modification of the microbiota of substrates.

### BACKGROUND OF THE INVENTION

Soil microorganisms are a key component of both natural and managed ecosystems. The complete set of microorganisms that can live in the soil ecosystem is called the microbiota or microbiome, which includes viruses, bacteria, fungi and archaea. The microbiota of the soil encompasses a variety of beneficial and harmful organisms that exist in a dynamic system of network interactions between the constituent organisms, in a perpetual cycle of adaptation to the external and internal changes of the different soil environments, either in the rhizosphere, in the different soil horizons or in the soil that is next to water flows (Fierer, Nat Rev Microbiology, 15, 579-590 (2017)).

Microbiota networks are mostly coordinated by diffusible substances emitted by microorganisms, called volatile organic compounds (VOCs), which play a fundamental role in various processes, such as communication between organisms, the alterations of the microbial nutrient cycles and the growth rate of the microorganisms that colonise the ecosystem (Abis et al., Scientific Reports 2020, vol 10, 6104). These processes, in turn, affect soil processes such as the consumption of atmospheric trace gases (such as hydrogen, carbon dioxide, nitric oxide, nitrous oxide, methane and others), soil acidity, soil nutrient cycle, hydraulic conductivity and hydrophobicity of the soil, nitrogen fixation, the degradation of xenobiotic compounds, chelation and detoxification of metals, the germination of plant seeds, protection of plants against abiotic stress and suppression of plant pathogens (Fierer, Nature Reviews Microbiology, 21 Aug 2017). All these processes can have a profound impact on the recovery and renewal of contaminated soils, on the stabilisation and nutrification of desert soils, on improving the yield and quality of agriculture, on soil humidification and aeration, on the renewal of soils of intensive agricultural use and in climate change (Jansson, J.K., Hoffmockel, K.S. Nat Rev Microbiol 18, 35-46 (2020)).

Previous studies have described how the microbiota of the soil can be modified *in vitro* in response to bacterial VOCs (Yuan et al., Environ Sci Pollut Res, 12 August 2017). Moreover, US20140086878 discloses the use of compounds obtained from fungal cultures for controlling pathogens and document WO2021007280 discloses the use of compounds obtained from nematodes for controlling the microbiota of the soil.

Therefore, it is essential to find new and ecologically efficient approaches to modify the microbiota of the soil in order to improve the mentioned processes, and at the same time reduce the use of chemicals or agrochemicals.

### DESCRIPTION OF THE INVENTION

The inventors of the present invention have discovered that compositions obtained from the culture of fungi, wherein the fungi are subsequently eliminated, have the ability to alter the microbiota of the substrate to which they are applied. Said alterations can result in significant effects on the microsystem and properties of the soil, as well as of the organisms that are part of or interact with the substrate.

### Composition

In a first aspect, the present invention relates to a composition free of living microorganisms, hereinafter, composition of the invention, obtained by means of a method comprising the following steps:
a) Cultivating at least one fungus in an appropriate culture medium; and
b) Eliminating or inactivating the fungus from the culture medium of step a) once the growth of the fungus has begun the logarithmic growth phase, to obtain the composition free of living microorganisms.

The present description relates to compositions produced by fungal cell cultures wherein the microorganism has grown and been metabolised. When the microorganism is eliminated from the culture medium in which it has grown, for example, by means of centrifugation and/or filtration, a composition free of living microorganisms is obtained. Thus, in a preferred embodiment, the composition takes the form of a filtrate. When, alternatively, the microorganism is not eliminated, or not completely eliminated, from the culture medium wherein it has grown, but it is inactivated, for example, by means of lysis (i.e., the inactivated microorganism or portions thereof are present in the medium), a composition comprising an inactivated microorganism is obtained. In both cases, these compositions can be obtained by cultivating a microorganism in specific growth media and culture conditions, as described in the present document.

In a preferred embodiment of the composition of the invention, the fungus is selected from a list consisting of: *Alternaria alternata* or a derived mutant, *Penicillium aurantiogriseum* or a derived mutant, *Trichoderma harzianum* or a derived mutant, A. *alternata* CECT 20912 strain or a derived mutant, P. *aurantiogriseum* CECT 20226 strain or a derived mutant, *T. harzianum* CECT 2413 strain or a derived mutant or any combination thereof. More preferably, the fungus belongs to the *Alternaria alternata* and/or *Penicillium aurantiogriseum* species, even more preferably the fungus is A. *alternata* CECT 20912 strain and/or P. *aurantiogriseum* CECT 20226 strain,

The *Alternaria alternata* strain of the invention was deposited by IDEN Biotechnology S.L., according to the Budapest Treaty, on 11 June 2014, in the Spanish Type Culture Collection (CECT), located at Parc Cientific Universitat de Valencia, calle Catedrático Agustin Escardino, 9, 46980 Paterna, Valencia, Spain. The strain received accession number CECT 20912 after the strain was considered viable and pure. Said strain thus deposited is accessible to the public without restrictions.

*Penicillium aurantiogriseum and Trichoderma harzianum* strains are also accessible to the public without restrictions at the CECT with accession numbers 20226 and 2413 respectively.

The term "mutant" as used in the present description relates to the fungi that are obtained using the species or strain selected from the above list as starting material, and which are characterised in that they maintain the properties of said deposited strain. The term "mutant" also includes the term "variant". Those skilled in the art will understand that mutants can be routinely obtained, for example, by means of spontaneous mutagenesis or directed mutation, using one or more of the fungal species mentioned above as starting material. Methods for obtaining mutants of a specific microbial strain are known in the art. An example can be found in Sambrook, J. and Russell, D.W. "Molecular cloning: a laboratory manual" chapter 13, "Mutagenesis", Cold Spring Harbor, third edition, 2001.

The expression "composition free of live microorganisms obtainable by means of the described process", is used in this document to define the composition by means of the preparation process thereof and relates to the products that can be obtained by means of the preparation process comprising the steps indicated herein. For the purposes of the invention, the expressions "obtainable", "obtained" and equivalent expressions are used interchangeably and, in any case, the term "obtainable" encompasses the term "obtained".

The expression "composition free of living microorganisms" as used herein relates to a composition produced by a fungal cell culture, which is obtained after eliminating the fungus that has been used in the process of the invention, in particular in step a) of the process, from the culture medium. The composition free of microorganisms lacks viable cells, mycelia or endospores. Said expression further comprises a composition produced by fungal cell cultures, which is obtained after inactivating the microorganism in the culture medium in which it has grown. The term "inactivated microorganism" relates to a microorganism that has been altered from its native state and is no longer capable of reproducing or forming colonies in culture.

The expression "cultivating at least one fungus in an appropriate culture medium" of step a) of the method to obtain the composition of the invention relates to the process of inoculating a fungus in a suitable or "appropriate culture medium" for the growth thereof. The term "fungal culture medium" as used in this description relates to a culture medium which may comprise components including nutrients, growth factors, minerals and the like. In a preferred embodiment of the method to obtain the composition of the invention, the culture medium of step a) is a medium that lacks amino acids and/or proteins, preferably a minimal medium.

The term "minimal culture medium" as used in the present description relates to a medium that includes only the nutrients that cells require to survive and proliferate in culture, usually without the presence of amino acids, and generally contains inorganic salts as sources of Na, K, Ca, Mg, P, N and S, a source of carbon and water. Optionally, it may contain one or more additional substances such as vitamins. Non-limiting examples of components of the culture media include CoCl₂.6H₂0; CuSO₄.5H₂0; FeNaEDTA, H₃BO₃, KI; MnSO₄.H₂0; Na₂MoO₄.2H₂0; ZnSO₄.7H₂0; CaCl₂; KH₂PO₄; KNO₃; MgSO₄; NH₄NO₃; Glycine; myo-lnositol; Nicotinic acid; Pyridoxine HCl; Thiamine HCl; Na₂HPO₄; KH₂PO₄; NaCl NH₄Cl; CaCl₂; MgSO₄. Non-limiting examples of such minimal media are M9 (Na₂HP04 95 mM / KH2P04 44 mM / NaCl 17 mM / NH4Cl 37 mM / CaCl2 0,1 mM / MgSO4 2 mM, bacteriological agar at 1.5%), MOPS, Murashige & Skoog (MS), and the like.

In another preferred embodiment of the method to obtain the composition of the invention, the appropriate culture medium further comprises an organic compound as a carbon source. Non-limiting examples of these compounds include sucrose, glucose, succinate, starch, fructose, maltose, maltotriose, lactose, galactose or xylose. In another even more preferred embodiment, the appropriate culture medium further comprises a compound as a source of nitrogen. Non-limiting examples of these compounds include NH₄NO₃, NH₄IC, NaNOs, KNOs.

In another preferred embodiment of the method to obtain the composition of the invention, the fungus is cultured without stirring. In another preferred embodiment of the method to obtain the composition of the invention, the fungus is cultured with stirring, in particular from 1 to 300 rpm, more particularly from 1 to 180 rpm, and even more particularly from 1 to 150 rpm.

In another preferred embodiment of the method to obtain the composition of the invention, the fungus is cultured at a temperature of 3 to 70 °C, more particularly from 15 to 50 °C, even more particularly from 20 °C to 40 °C, even more preferably at 28 °C.

The fungus can be inoculated in the growth culture medium in an aerobic, microaerophilic or anaerobic environment. Fungi can be cultured on a small scale (e.g., using flasks or laboratory fermenters) or on a large scale (e.g., using industrial fermenters) or fermentation (including, among others, continuous cultures or fermentations, by batches, or in solid state) in laboratory or industrial fermenters. Optionally, the culture medium containing the fungi can be homogenised or liquefied, for example, by means of a mixer.

In a preferred embodiment of the method to obtain the composition of the invention, the fungus is eliminated from the culture medium of step a) when the growth of the microorganism has reached at least a value equal to or greater than 5%, 10 %, 20 %, 30 %, 40 %, 50 %, 60 %, 70 %, 80 % or 90 % of the logarithmic growth phase. In particular, the fungus is eliminated from the culture medium of step a) after the beginning of the logarithmic growth phase and before the death phase begins. In an even more preferred embodiment, the fungus is eliminated from the culture medium of step a) after the beginning of the logarithmic growth phase and before the stationary phase starts.

In another preferred embodiment of the method to obtain the composition of the invention, step b) is carried out when the colony-forming units (CFU) per millilitre are equal to or greater than 10³, 10⁴, 10⁵, 10⁶ or 10⁷.

The elimination of the microorganisms from the culture medium (step b) to obtain the composition free of live microorganisms can be carried out by means of any method known to those skilled in the art. Generally, this step can be done by means of filtration (e.g., with a filter with an average pore size of 0.1 to 0.5 µm), centrifugation (e.g., from 1000 to 6000 rpm), sedimentation (e.g., by the effect of gravity), precipitation, flocculation, electro-precipitation or extraction. In a more preferred embodiment, step b) is carried out by means of centrifugation and/or filtration. Depending on the technique used, the composition or exudate free of living microorganisms takes the form of a filtrate, supernatant or extract. In a preferred embodiment of the composition of the invention, the composition takes the form of a filtrate.

If required or desired, the process to obtain the composition free of living microorganisms of the invention may include additional steps. For example, after obtaining the composition, it can be lyophilised, concentrated, ultrafiltrated, granulated, sterilised, clarified, agglomerated, washed, absorbed, adsorbed, crystallised, precipitated, extracted, dried, distilled, dialysed, rectified, chromatographed, spray dried and depyrogenated, among other possibilities. In another preferred embodiment of the composition of the invention, the composition takes the form of a distillate.

As previously described, the interactions between microorganisms in the microenvironments of substrates are often caused by volatile organic compounds (VOCs). Many of these components are present in the composition of the invention. Thus, in a preferred embodiment of the composition of the invention it comprises ethanol, 1-propanol, 1-butanol-3-methyl, benzaldehyde-2-methyl, 2,4-dimethyl-1-heptene, 2-phenylethyl alcohol, benzene-1,3-bis(1,1-dimethylethyl), acetic acid, propenoic acid ethyl ester, butyrolactone, 2-heptanone-4-methyl, 2-heptanone-4,6-dimethyl and 2-nonanone.

The composition of the invention is easily scalable to industrial production processes, so it can be formulated as industrial or agricultural compositions. Thus, in another preferred embodiment of the composition of the invention, it further comprises an acceptable agro-industrial carrier and/or an additive.

The term "acceptable agro-industrial carrier" as used in this document relates to a material that can be used to improve the supply, storage or application of the composition to a substrate, such as the soil. The acceptable agro-industrial carrier must be compatible with the composition of the invention in the sense that it does not impair the efficacy thereof and that in itself does not have a significant detrimental effect on the substrate and organisms and/or beings that interact with said substrate. Examples of acceptable agro-industrial carrier include, but are not limited to, adjuvants, diluents, surfactants, conditioning agents, antifreeze, antifoaming agents, thickeners, wetting agents, spreading agents, dispersing agents, emulsifying agents, antimicrobial agents and the like. In a particular embodiment, the additive is selected from a list consisting of: herbicide, pesticide, fungicide, fertiliser and any of the combinations thereof.

Lastly, the composition described herein can take various forms, depending on the intended use. Thus, the composition of the invention can be in the form of solid particles, solutions, dispersions, suspensions or emulsions.

### Uses of the composition of the invention

As previously mentioned, the inventors of the invention have discovered that the composition of the invention has the ability to alter the microbiota of the substrate to which it is applied.

Thus, another aspect of the invention is the use of the composition of the invention for the modification of the microbiota in a substrate, hereinafter, method of the invention.

The term "microbiota" as used in the present description relates to a group of microscopic life forms that includes bacteria, archaea, viruses and eukaryotes such as fungi. This group of microorganisms, the microbiota, encompasses a variety of beneficial and harmful organisms that exist in a dynamic system of interactions, so the interactions between the various species of the microbiome can be remarkably coordinated, and alterations of said interactions can be translated into alterations in the substrate that comprises said microbiota.

The expression "modification of the microbiota" as used in the present invention relates to the alteration of behaviour, structure, metabolism, physiology and/or growth of microorganisms present in the microbiota, individually or together, wherein said modification is imparted directly by the composition of the invention or indirectly due to alterations in the interactions between modified and non-modified microorganisms. The modification of the microbiota of a substrate is determined in comparison to a untreated substrate, in other words, where the composition of the invention has not been in contact with the microbiota of said substrate.

In a preferred embodiment of the use of the invention, the modification comprises the modification of the growth of one or more bacterial and/or fungal species present in the microbiota compared to a control not treated with the composition of the invention.

The term "growth" as used in the present invention relates to the increase in the cell number or abundance and/or size of a microorganism. This increase is measurable and quantifiable. The term "growth" also encompasses physiological and/or metabolic, as well as behavioural characteristics such as the formation of colonies and/or biofilms by microorganisms.

In a preferred embodiment of the use of the invention, growth modification of bacterial species is selected from a list consisting of: promoting growth rate, inhibiting growth rate, modifying the morphology of colonies, modifying the physiology, inhibiting the formation of biofilms, promoting the formation of biofilms, and any of the combinations thereof.

In another preferred embodiment of the use of the invention, the modification of the growth of fungal species is selected from a list consisting of: promoting growth rate, inhibiting growth rate, modifying the morphology of the structure generated by the fungal species, modifying the physiology, and any of the combinations thereof.

The terms "compare" and "comparison", as used in the description, relate, but are not limited, to the comparison of the number or abundance of species of microorganisms between two samples of identical substrates where one has been treated with the composition of the invention and the other has not. The samples can be analysed simultaneously or consecutively. The comparison can be manual or computer-aided.

The term "modification of the growth" as used in the present description relates to a significant deviation, which can be a reduction or an increase, of the absolute or relative amount of the number or abundance of at least one bacterial or fungal species compared to the absolute or relative amount of the number or abundance of the same bacterial or fungal species in the untreated substrate.

The significant deviation can be established by a person skilled in the art by using different statistical tools, for example, but not limited to, by determining confidence intervals, determining the p-value, Student's t-test or Fisher's discriminant functions. Preferably, confidence intervals are at least 90 %, at least 95 %, at least 97 %, at least 98 % or at least 99 %. Preferably, the p-value is less than 0.1, than 0.05, than 0.01, than 0.005 or 0.0001.

Determining the modification of the growth of one or more bacterial and/or fungal species can be carried out by techniques that are known to those skilled in the art. Examples of said techniques are, but not limited to, amplicon sequencing also referred to as targeted sequencing, shotgun sequencing or high-throughput sequencing. Said techniques are typical tools of metagenomics, the study of genetic material obtained directly from environmental samples. Both techniques and the protocols for performing it are widely described in the art (Caporaso et al., 2011 PNAS, 108, 4516-4522; Caporaso et al., 2012 ISME, 6, 1621-1624; Bybee y Heather, 2011 Genome Biology and Evolution, 3, 1312-1323; Tyson et al., 2004 Nature, 428, 37-43; Schuster, 2007 Nature Methods 5(1), 16-18) and are known to those skilled in the art.

The modification of the microbiota of the substrate obtained by the use of the invention will depend on the specific composition of said microbiota in the substrate. Despite this, the modification will have an effect on the rate of growth of the microorganisms.

Thus, in a preferred embodiment of the use of the invention, the modification comprises an increase in abundance of one or more bacterial and/or fungal species present in the microbiota compared to a control not treated with the composition of the invention.

In another preferred embodiment of the use of the invention, the modification comprises an increase in abundance of one or more bacterial species of the *Betaproteobacteria* and/or *Gammaproteobacteria* class present in the microbiota compared to a control not treated with the second composition of the invention.

The term *"Betaproteobacteria",* also referred to as beta proteobacteria, as used in the present description relates to a group of proteobacteria with varied metabolism, formed by several groups of aerobic or facultative bacteria that are very versatile in their degradation capacities. This group includes chemolithotrophs, such as the ammonia-oxidising genus *Nitrosomonas,* phototrophs such as *Rhodocyclus* and *Rubrivivax.* Moreover, beta proteobacteria act in nitrogen fixation in the rhizosphere, wherein they oxidise ammonium to produce nitrite.

The term *"Gammaproteobacteria"* as used in the present description relates to a group of proteobacteria that contains bacteria that are medically, ecologically and scientifically important. Gamma proteobacteria are abundantly distributed in various ecosystems such as soil, freshwater lakes, rivers, oceans and salt lakes. In said group there are phototropic bacteria such as purple sulphur bacteria that are used in wastewater treatment stations, important bacteria in the bioremediation of crude oil after spills, as well as bacteria that regulate carbon fixation in coastal sediments.

In a preferred embodiment of the use of the invention, the modification comprises an increase in abundance of one or more bacterial species that are selected from a list consisting of: *Bradyrhizobium lupini, Burkholderia arboris, Caballeronia udeis, Paraburkholderia paradisi, Paraburkholderia silvatlantica, Duganella ginsengisoli, Massilia varians, Pseudomonas brassicacearum, Pseudomonas knackmussii, Pseudomonas mediterranea, Rhodanobacter glycinis* and any of the combinations thereof.

As well as the effect on bacteria, the composition also affects fungal growth. Thus, in another preferred embodiment of the use of the invention, the modification comprises an increase in abundance of one or more fungal species of the *Saccharomycetes* and *Sordariomycetes* class present in the microbiota compared to a control not treated with the composition of the invention.

The term *"Saccharomycetes"* as used in the present invention relates to the group, also known as *Hemiascomycetes,* of yeasts that reproduce asexually by budding. *Saccharomyces cerevisiae* is the best known species, a model organism in research, but that can be found in the environment in various habitats such as water, soil and various plants.

The term *"Sordariomycetes"* as used in the present invention relates to a fungal group characterised in that it produces their asci in pericial fruiting bodies. This class presents fungi with great morphological variability, forms of growth and habitats. Growth in soils, walls, trees, manure can be highlighted in these habitats and as decomposers of excrement and dead plant matter, as well as fungal parasites, and animal and plant pathogens.

Within the fungal groups mentioned, the inventors have identified the fungal species with the greatest increase in abundance in response to the composition of the invention. Likewise, in another preferred embodiment of the use of the invention, the modification comprises an increase in abundance of one or more fungal species that are selected from the list consisting of: *Pseudogymnoascus sp. CCF 5028, Galactomyces candidum, Candida subhashii, Nadsonia starkey-henricii, Cyberlindnera saturnus, Trichoderma harmatum, Mariannaea camptospora, Pseudocosmospora rogersonii, Myxocephala albida* and any of the combinations thereof.

Just as the use of the composition of the invention results in increased bacteria and/or fungal growth in the microbiota, due to the interconnected network nature thereof, the inventors also detected the reduction in bacterial and/or fungal species in the treated microbiota. Therefore, in another preferred embodiment of the use of the invention, the modification comprises a reduction in abundance of one or more bacterial and/or fungal species present in the microbiota compared to a control not treated with the composition of the invention. In another preferred embodiment of the use of the invention, the modification comprises a reduction in abundance of one or more bacterial species of the *Alphaproteobacteria* class present in the microbiota compared to a control not treated with the composition of the invention.

The term *"Alphaproteobacteria"* as used in the present description relates to a group of proteobacteria, also referred to as alpha proteobacteria, very diverse where phototropic bacteria such as purple sulphur bacteria can be found, intracellular chemotropic bacteria that inhabit the interior of eukaryotic host cells as endosymbionts or pathogens or oligotrophic bacteria.

In another preferred embodiment of the use of the invention, the modification comprises a reduction in abundance of one or more bacterial species that are selected from the list consisting of: *Paludibaculum fermentans, Cellulosimicrobium funkei, Gaiella occulta, Phenylobacterium lituiforme, Nitrosospira multiformis, Opitutus terrae* and any of the combinations thereof.

In another preferred embodiment of the use of the invention, the modification comprises a reduction in abundance of one or more fungal species that are selected from the list consisting of: *Penicillium aeneum,* P. *wollemiicola, Geomyces sp. Nankai_19mb, Pichia fermentans, Saccharomyces cerevisiae, Verticillium nubilum, Sordariales sp.* and any of the combinations thereof.

As mentioned above, in the microbiota of a substrate there are beneficial microorganisms, as well as microorganisms harmful to the substrate, the flora and/or fauna present or interacting with said substrate. Among said harmful organisms are pathogenic organisms for said flora and/or fauna. In another preferred embodiment of the use of the invention, the modification comprises a reduction in abundance of one or more pathogenic bacterial and/or fungal species.

The terms "pathogenic" or "pathogen" as used in the present invention relate to organisms such as an algae, bacterium, fungus, insect, nematode, parasitic plant, a protozoan, or a virus with the ability to cause disease in a plant or animal, particularly, a plant or animal that integrates or interacts with the substrate treated with the composition. In the present invention the pathogen is a bacterial species or a fungal species. The terms "pathogenic" or "pathogen" also include opportunistic pathogenic species, which only produce a disease in their host under specific conditions such as in cases of low plant immunity. Likewise, the person skilled in the art understands that certain species of microorganisms are only pathogenic in certain hosts, while in other hosts they may be commensal. An example of such species is *S*. *cerevisiae* yeast, a commensal of the microenvironment but under certain conditions a pathogen of the vineyard. In a preferred embodiment of the use of the invention, the pathogenic species are selected from a list consisting of: *S*. *cerevisiae and V. nubilum.* In another preferred embodiment of the use of the invention, the substrate is characterised in that it is infected by pathogenic bacterial and/or fungal species.

The invention is used in a substrate comprising a microbiota, which is modified with the application of the composition of the invention. The term "substrate" as used in the present invention relates to the base, matter, medium or surface where microorganisms live, develop and proliferate. Said substrate can also integrate and/or interact with other organisms that depend on said substrate for their survival, such as plants and animals. The term "substrate" encompasses both natural and artificial substrates, as well as artificially modified natural substrates. Examples of substrates are, but not limited to, the soil, industrial sediments, coastal sediments, wastewater, industrial water, environmental water, excrement, decomposing plant or animal organic matter and soil organic material. Thus, in a preferred embodiment of the use of the invention, the substrate is selected from a list consisting of: soil, industrial sediments, coastal sediments, wastewater, excrement, organic matter, universal substrate, professional substrate, sand, exfoliated vermiculite, expanded perlite and any of the combinations thereof.

The term "soil" as used in the present description relates to a continuous natural body formed by mineral and organic components that includes solid, liquid and gaseous phases. According to the World Reference Base for Soil Resources of the Food and Agriculture Organization of the United Nations (www.fao.org) there are 32 types of reference soils (Table 1), all of them with their particular microbiota.

**Table 1: Soil types according to the World Reference Base for Soil Resources**

| **Soil types and their characteristics** | | **Name** |
|---|---|---|
| **1. Soils with thick organic layers** | | Histosols |
| **2. Soils with strong human influence** - | | |
| | Long and intensive agricultural use: | Anthrosols |
| | Containing significant amounts of artefacts: | Technosols |
| **3. Soils with limitations to root growth** - | | |
| | Permafrost-affected: | Cryosols |
| | Thin or with many coarse fragments: | Leptosols |
| | High content of exchangeable Na: | Solonetz |
| | Alternating wet-dry conditions, shrink-swell clays: | Vertisols |
| | High concentration of soluble salts: | Solonchak |
| **4. Soils distinguished by Fe/Al chemistry** - | | |
| | Groundwater-affected, underwater and in tidal areas: | Gleysols |
| | Allophanes or Al-humus complexes: | Andosols |
| | Subsoil accumulation of humus and/or oxides | Podzols |
| | Accumulation and redistribution of Fe: | Plinthosols |
| | Low-activity clays, P fixation, many Fe oxides, strongly structured: | Nitisols |
| | Dominance of kaolinite and oxides: | Ferralsols |
| | Stagnating water, abrupt textural difference | Planosols |
| | Stagnating water, structural difference and/or moderate textural difference: | Stagnosols |
| **5. Pronounced accumulation of organic matter in the mineral topsoil** - | | |
| | Very dark topsoil, secondary carbonates: Phaeozems PH | Chernozems |
| | Dark topsoil, secondary carbonates: | Kastanozems |
| | Dark topsoil, no secondary carbonates (unless very deep), high base status: | Phaeozems |
| | Dark topsoil, low base status: | Umbrisols |
| **6. Accumulation of moderately soluble salts or non-saline substances** | | |
| | Accumulation of, and cementation by, secondary silica: | Durisols |
| | Accumulation of secondary gypsum: | Gypsisols |
| | Accumulation of secondary carbonates: | Calcisols |
| **7. Soils with clay-enriched subsoil** - | | |
| | Interfingering of coarser-textured, lighter coloured material into a finer-textured, stronger coloured layer: | Retisols |
| | Low-activity clays, low base status: | Acrisols |
| | Low-activity clays, high base status: | Lixisols |
| | High-activity clays, low base status: | Alisols |
| | High-activity clays, high base status: | Luvisols |
| **8. Soils with little or no profile differentiation** - | | |
| | Moderately developed: | Cambisols |
| | Sandy: | Arenosols |
| | Stratified fluviatile, marine and lacustrine sediments: | Fluvisols |
| | No significant profile development: | Regosols |

Thus, in a particular embodiment of the use of the invention, the substrate is a type of soil that is selected from a list consisting of: Histosols, Anthrosols, Technosols, Cryosols, Leptosols, Solonetz, Vertisols, Solonchak, Gleysols, Andosols, Podzols, Plinthosols, Nitisols, Ferralsols, Planosols, Stagnosols, Chernozems, Kastanozems, Phaeozems, Umbrisols, Durisols, Gypsisols, Calcisols, Retisols, Acrisols, Lixisols, Alisols, Luvisols, Cambisols, Arenosols, Fluvisols, Regosols and any of the combinations thereof.

Another way of characterising soils is in relation to their use, or absence of said use, for agricultural production or cultivation of important agricultural collections. Thus, in a preferred embodiment of the use of the invention, the substrate is a cultivated soil or a non-cultivated soil. Soils typically used for agriculture, such as Anthrosols, Alisols, Cambisols, Fluvisols, Luvisols and Nitisols, are loamy textured soils, as they are easy to cultivate by farmers and can be very productive for growing crops, which are commonly described as medium in texture with functionally equal contributions from sand, slime and clay. Despite this, other soils have the potential for cultivation, but they need improvements to enable or increase said cultivation such as, but not limited to, moisture retention, increased porosity, acidity reduction, nutrient retention, salt reduction, water content reduction, increased soil stability, reduction of decomposing organic matter. Thus, in a preferred embodiment of the use of the invention, the substrate is a soil that is characterised by at least one property that is selected from the list consisting of: low humidity, high salt content, high acidity, low nutrient content, low porosity, high water content, low stability, high content of surface organic matter, low humus content and any of the combinations thereof.

Another microenvironment present in the soil where the interaction between microorganisms and plants is essential for the development of said plants is the rhizosphere. Thus, in a preferred embodiment of the use of the invention, the substrate is the rhizosphere. The term "rhizosphere" as used in the present description relates to the part of the soil that is immediate to the living roots and that is under the direct influence of the same. The interactions between microorganisms and the proteins and sugars released by plant roots give rise to more complex interactions, that influence plant growth and competition for resources.

The term "industrial sediments" as used in the present description relates to silt, solid slurry or liquid slurry obtained or produced by industrial processes. In general, said sediments contain high levels of chemical compounds that are harmful to the fauna and flora, which is why they need treatments for the rehabilitation thereof. One type of said treatment is named bioremediation wherein microorganisms are used to eliminate contaminants and toxins from said sediments, wherein the compositions of the invention may find use. Thus, in another preferred embodiment of the use of the invention, the substrate is silt, solid slurry or liquid slurry.

The term "wastewater" as used in the present invention relates to any type of water the quality of which is negatively affected by anthropogenic influence. Wastewater includes used, household, urban waters and liquid industrial or mining waste that are eliminated, or the waters that were mixed with the foregoing (rain or natural waters). As with "industrial sediments", "wastewater" can also benefit from bioremediation for the rehabilitation thereof.

The term "excrement" as used in the present description relates to faeces or faecal matter, which are the set of solid or liquid waste that constitute the final product of the digestion process. They are formed by the remains of food that is not absorbed by the digestive system, such as fibres or other components that are not useful for the being in question. The excrement are generally used as fertilisers because they contain nutrients such as nitrogen, phosphorus, potassium, organic matter and sulphur. Thus, the composition of the invention can be used to enhance the microbiota of the excrement, or in the event that said excrement are found to be contaminated, the composition of the invention can be used in the bioremediation of said substrate.

For purposes of the present description, the term "coastal sediments" relates to the material deposited by rivers and/or eroded from rocks in the coastal area. The microbiota of said sediments is highly important in carbon fixation, so the maintenance and improvement of the fixation would have important effects in the fight against global warming. Environmental changes can cause changes in the microbiota of said sediments, so the composition of the invention can be used for the maintenance and/or restoration of the microbiota. Moreover, due to external factors, mainly pollution from human activity, the microbiota of said sediments can be affected by industrial sediments and/or untreated wastewater, leading to the deposition of contaminants and consequent changes in the microbiota, requiring treatments such as bioremediation.

The term "contaminants" as used in the present description relates to heavy materials or man-made compounds - xenobiotics - present in the substrates or soils in high concentrations. Examples are, but not limited to, lead, mercury, arsenic, copper, zinc, nickel, polyaromatic hydrocarbons, herbicides and insecticides. Thus, in a preferred embodiment of the use of the invention, the substrate is characterised by presenting high concentrations of at least one compound that is selected from the list consisting of: lead, mercury, arsenic, copper, zinc, nickel, polyaromatic hydrocarbons, herbicides, insecticides and any of the combinations thereof.

The term "organic matter" as used in the present description relates to natural organic material, which is matter made of organic compounds that come from the remains of organisms, or portions of organisms, that were once alive such as plants, animals and their waste products in the natural environment. Examples of "organic matter" are the remains of leaves and branches that fall to the ground and decompose into their organic components. Once such decomposition reaches a stage that resists further decomposition, the material is called humus. The definition of "organic matter" in the present description also encompasses the terms "humus" and "natural peat". Thus, in a preferred embodiment of the use of the invention, the substrate is organic matter of the soil. In another preferred embodiment of the use of the invention, the substrate is plant and/or animal organic matter. In another even more preferred embodiment of the use of the invention, the substrate is humus and/or peat.

As used herein, the term "natural peat" relates to a dark brown, carbon-rich organic material, formed by a spongy and light mass wherein the plant components that originated it can still be seen. Natural peat can be found commercially (Compo GmbJ Co K.G.). "Natural peat" can be classified into two groups: white peats and black peats. White peats, also called sphagnum, is characterised by a higher organic matter content and is less decomposed. Black peats are characterised by lower organic matter content and are more mineralised. Thus, in a preferred embodiment of the use of the invention, the substrate is natural peat, preferably white peat or black peat.

Other substrates to which the use of the invention relates are "universal substrate" and "professional substrate". As used in the present invention, the two terms relate to types of soil made from raw materials such as white and black peat, coconut fibre, perlite and fertiliser, among others. The term "universal substrate" relates to a type of soil that enables the growth of a large number of plants and/or crops, comprising a mixture of 2 to 4 raw materials. The term "professional substrate" relates to a complex mixture of various raw material components mentioned above, with a specific purpose, in other words, a mix that is targeted, for example, and without limitation, to acidophilic plants that require substrates with a greater capacity for water retention.

Moreover, the substrates to which the use of the invention is applied also include sands, exfoliated vermiculite and expanded perlite. The term "sands" as used in the present invention relates to a set of loose fragments of rocks or minerals of a general size between 0.0625 and 2 millimetres. Sands can be classified based on the size of the fragments, wherein sands with a higher proportion of fragments of size equal to or less than 1.03 millimetres are called fine sands, and sands with a higher proportion of fragments larger than 1.03 millimetres are called coarse sands. Thus, in a particular embodiment of the use of the invention, the substrate is fine sand and/or coarse sand.

The term "exfoliated vermiculite" relates to the material obtained from a mineral formed by iron or magnesium silicates, wherein said material is subjected to a heat treatment process, known as exfoliation, to expand the mineral, thus obtaining the "exfoliated vermiculite". Exfoliated vermiculite is commercially available under the name Termite^{®}. Similarly, the term "expanded perlite" relates to the material obtained from the perlite mineral after subjecting said material to a washing, grinding and baking process.

The use of the invention also encompasses the combination of substrates, since as the person skilled in the art will know, the combination of substrates is the most common in nature. Thus, in a preferred embodiment of the use of the invention, the substrate comprises natural peat, fine sand and expanded vermiculite. In an even more preferred embodiment of the use of the invention, the substrate comprises natural peat, fine sand and expanded vermiculite in a ratio of 1 to 1 to 1.

The use of the composition of the invention is made such that the composition of the invention makes contact with the microbiota of the substrate to which it is applied. Said contact between the composition and the microbiota of the substrate can be made directly or by allowing the compounds of the composition of the invention to act in the surroundings, the environment or the storage space of the substrate by means of the usual treatment methods, for example, by immersion, spraying, evaporation, nebulisation and/or dispersion on the substrate. Thus, in another preferred embodiment of the use of the invention, the composition is applied to the substrate by irrigation, immersion, spraying, evaporation, nebulisation and/or dispersion.

As the person skilled in the art will know, the composition of the invention can be applied directly to the substrate or can be diluted in water or an appropriate solvent, before the application thereof. Examples of dilutions can be, but not limited to, 1:2, 1:4 and 1:8 in water. The composition of the invention is applied to the substrate in an effective dose. Thus, in a preferred embodiment of the use of the invention, the composition of the invention is used in an effective dose.

For purposes of the present invention, the term "effective dose" relates to a nontoxic amount of the composition of the invention, as described in the present document, that is sufficient to provide the desired effect in substrates, i.e., modifying the microbiota of the substrate in a beneficial way. The precise and effective amount of the composition of the invention will depend on the type of substrate and microbiota, of the fauna and flora that interact and encompass said substrate, of the surface of said substrate, as well as the type of administration used. Therefore, it is difficult to specify an exact effective amount in advance. However, the effective amount for a given situation can be determined by routine experiments and is within the criterion of a person skilled in the art.

Throughout the description and the claims, the word "comprises" and its variants do not intend to exclude other technical features, additives, components or steps. For those skilled in the art, other objects, advantages and features of the invention may be partially deduced from both the description and the embodiment of the invention. The following examples and figures are provided by way of illustration and are not intended to limit the present invention.

### BRIEF DESCRIPTION OF THE FIGURES

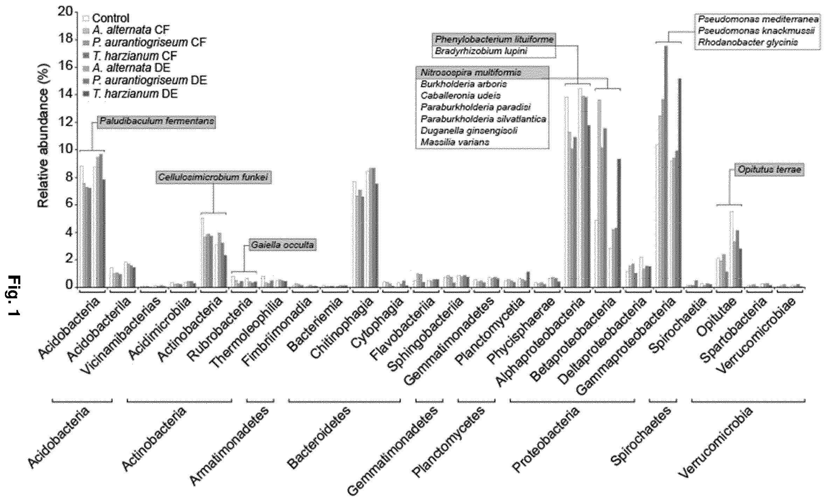

**Fig. 1** - The application of the composition of the invention to the soil in the form of filtrate (CFs) and in the form of distillate (DE) alters the composition of the bacterial microbiota of the soil. The figure shows the relative abundance of bacteria in soils irrigated with or without fungal CFs and DEs. The bacteria were arranged according to the phylum and class thereof. Species treated here appear in boxes. The names of the species enriched and depleted by application of CFs and DEs to the soil are included in white and grey boxes, respectively.

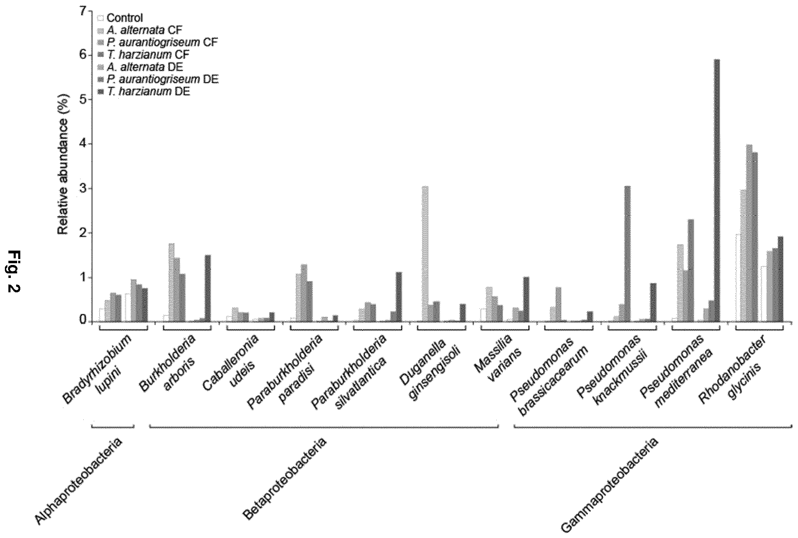

**Fig. 2** - The application of the composition of the invention to the soil in the form of filtrate (CFs) and in the form of distillate (DE) strongly enriches the beneficial bacterial microbiota of the soil. The figure shows the relative abundances of soil bacteria that were regulated by the application of fungal CFs and DE.

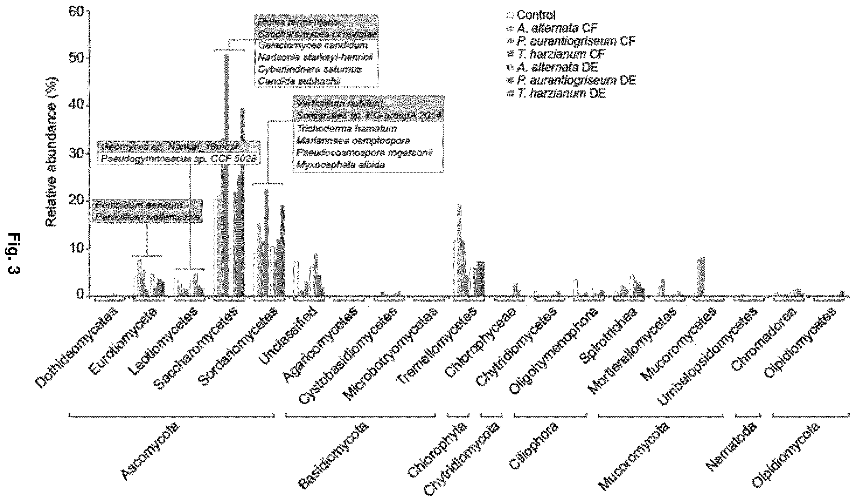

**Fig. 3** - The application of the composition of the invention to the soil in the form of filtrate (CFs) and in the form of distillate (DE) alters the composition of the fungal microbiota of the soil. The figure shows the relative abundances of fungi in soils irrigated with fungal CFs and DE. Fungi were classified according to the phylum and class thereof. Species treated here are in boxes. The names of the species enriched and depleted by application of CFs and DEs to the soil are included in the white and grey boxes, respectively.

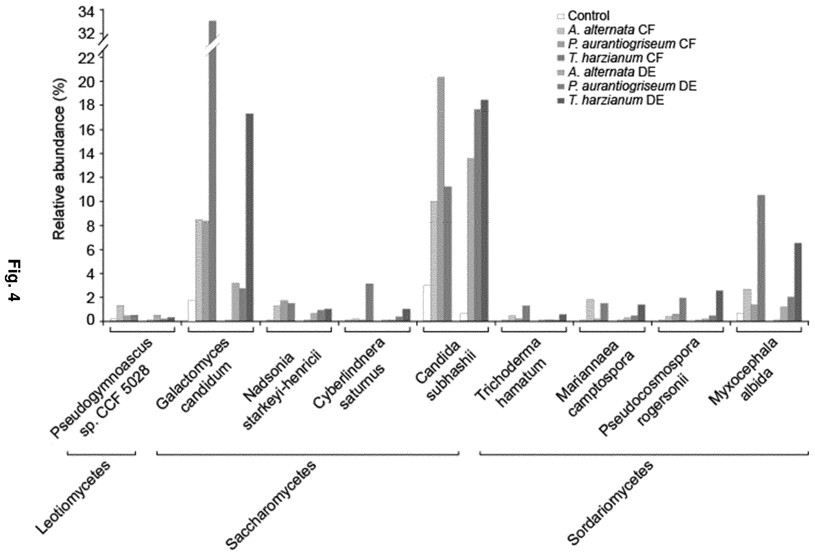

**Fig. 4** - The application of the composition of the invention to the soil in the form of filtrate (CFs) and in the form of distillate (DE) strongly enriches the beneficial bacterial microbiota of the soil. The figure shows the relative abundance of the soil fungi discussed herein that were regulated by the application of fungal CFs and DE.

### EXAMPLES

Next, the invention will be illustrated by means of assays carried out by the inventors, which demonstrate the effectiveness of the product of the invention.

### Example 1 - Effect of the composition of the invention on cultivated soils

### Materials and methods

### Preparation of the composition of the invention

Glycerol Stocks of *T. harzianum* (CECT2413), A. *alternata* (CECT 20912) and P. *aurantiogriseum* (CECT20226) were used to inoculate 500 ml Erlenmeyer flasks containing 200 ml of liquid Murashige and Skoog (MS) medium supplemented with 90 mM sucrose. Cultures were incubated at 28 °C with constant stirring at 180 rpm on a rotary stirrer for 7 days. Next, 100 ml of the cultures were poured into 2 L Erlenmeyer flasks containing 1 L of MS-sucrose medium and incubated at 28 °C with constant stirring at 180 rpm for 3 days, after which the fungal mycelium was eliminated using Whatman No. 1 filter paper. The resulting cell free filtrate (CF) composition was sterilised using a 0.22 µm Millipore membrane filter and stored at 4°C awaiting subsequent use. The compositions in the form of distillate (DE) were obtained by distilling the CF at 50 °C using a rotary evaporator R3000 (BUCHI).

### Analytical method

The VOCs in the composition of the invention were determined by gas chromatography-mass spectrometry (GC-MS) using the solid phase microextraction (SPME) technique as described by García-Gómez et al. (2019, Plant Cell and Environment, 42(5), 1729-1746). Briefly, VOCs in the composition of the invention in Erlenmeyer flasks were adsorbed at 25 °C for 30 min using solid phase microextraction fibre coated with DVB/CAR/PDMS. The fibre was injected into an Agilent 7890A gas chromatograph with a 30 m x 0.25 mm HP-5MS fused silica column. Mass spectral analyses were performed with an Agilent 5975C instrument. VOC mass spectra were compared with those obtained from the NIST library (NIST/NIH/EPA Mass Spectral Library, Standard Reference Database 1, NIST 11. Standard Reference Data Program, National Institute of Standards and Technology: Gaithersburg, MD, USA, 2011) and identifications were confirmed using commercially available standard compounds.

### Preparation of the soil sample, DNA extraction and high-throughput sequencing

Soil microbiome studies were carried out at Lifesequencing S.L. (Paterna, Valencia, Spain) using the soil from 250 ml pots cultured for 4 weeks in growth chambers. Three days after the third treatment with the composition of the invention, three replicate samples were collected, each of them composed of soil from three pots, they were mixed, were sieved to a particle size < 2 mm, they were lyophilised and stored at -80 °C. Soil DNA was extracted from 10 grams of soil using a QIAGEN DNeasyMericon kit. The quantity and purity of the DNA were examined with a Nanodrop ND-1000 spectrophotometer (NanoDrop Technologies, Delaware, USA). Bacterial 16S rRNA and fungal ITS libraries were built following the "16S metagenomic sequencing library preparation" protocol given for the Illumina MiSeq system, and using optimised primers targeting the V3 and V4 hypervariable regions of the 16S rRNA gene for bacterial profiling (Klindworth et al., 2013, Nucleic Acid Research, 41 (1), e1) and primers covering ITS1-ITS2 for fungal profiling (Op De Beeck et al., 2014, PLOS ONE, 9(6), e97629) have been described. The libraries were sequenced on an Illumina MiSeq instrument. The raw readings were selected, trimmed and merged on pair-end readings using PEAR V.0.9.1. Chimeras were filtered with the UCHIME algorithm from the USEARCH package (Edgar, Haas, Gracious, Quince, & Knight, 2011) and high-quality sequences were grouped into operational taxonomic units (OTUs), using UCLUST with a similarity threshold of 97% (Abarenkov et al., 2010, New Phytologist, 186(2), 281-285). A total of 5,282,314 bacterial sequence readings were obtained from 24 samples. The number of high-quality sequences per sample ranged from 98,030 to 140,027 and were grouped into 6,241 OTUs. Moreover, a total of 3,283,782 fungal sequence readings were obtained. The number of high-quality sequences per sample ranged from 50,007 to 90,123, which gave rise to 1567 OTU. Rarefaction curves obtained using Perl scripts in QIIME suggested that the sequencing depth was sufficient to cover the majority of detectable bacterial and fungal species, since the curves began to stabilise or reached their asymptote for all types of samples per treatment. Control soils for soils treated with the composition of the invention were those irrigated with water and diluted MS medium supplemented with 1.5 mM glucose and fructose, respectively.

### Data analysis

Differences were considered significant if P < 0.05. In this study, we used the Shannon and Chao 1 indexes to characterise alpha diversity and microbial richness, respectively.

### Results

### Analysis of the composition of fungal cell-free CFs

The analyses of the organic volatilomes of the composition of the invention obtained from the three mentioned fungi identified a total of 80 VOCs (Table 2). Although the volatilomes were very different in each of the compositions of the invention, 13 compounds (i.e. ethanol, 1-propanol, 1-butanol-3-methyl, benzaldehyde-2-methyl, 2,4-dimethyl-1-heptene, 2-phenylethyl alcohol, benzene-1,3-bis(1,1-dimethylethyl), acetic acid, propanoic acid ethyl ester, butyrolactone, 2-heptanone-4-methyl, 2-heptanone-4,6-dimethyl and 2-nonanone) could be identified in all three (Table 2). Sucrose could not be detected in the three compositions, but all these extracts each contained 0.5-1.5 mM glucose and fructose, indicating a strong extracellular fungal sucrolytic activity.

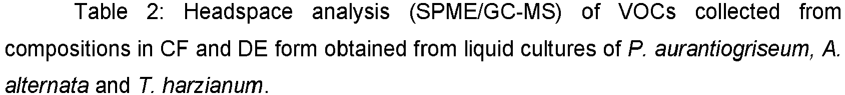

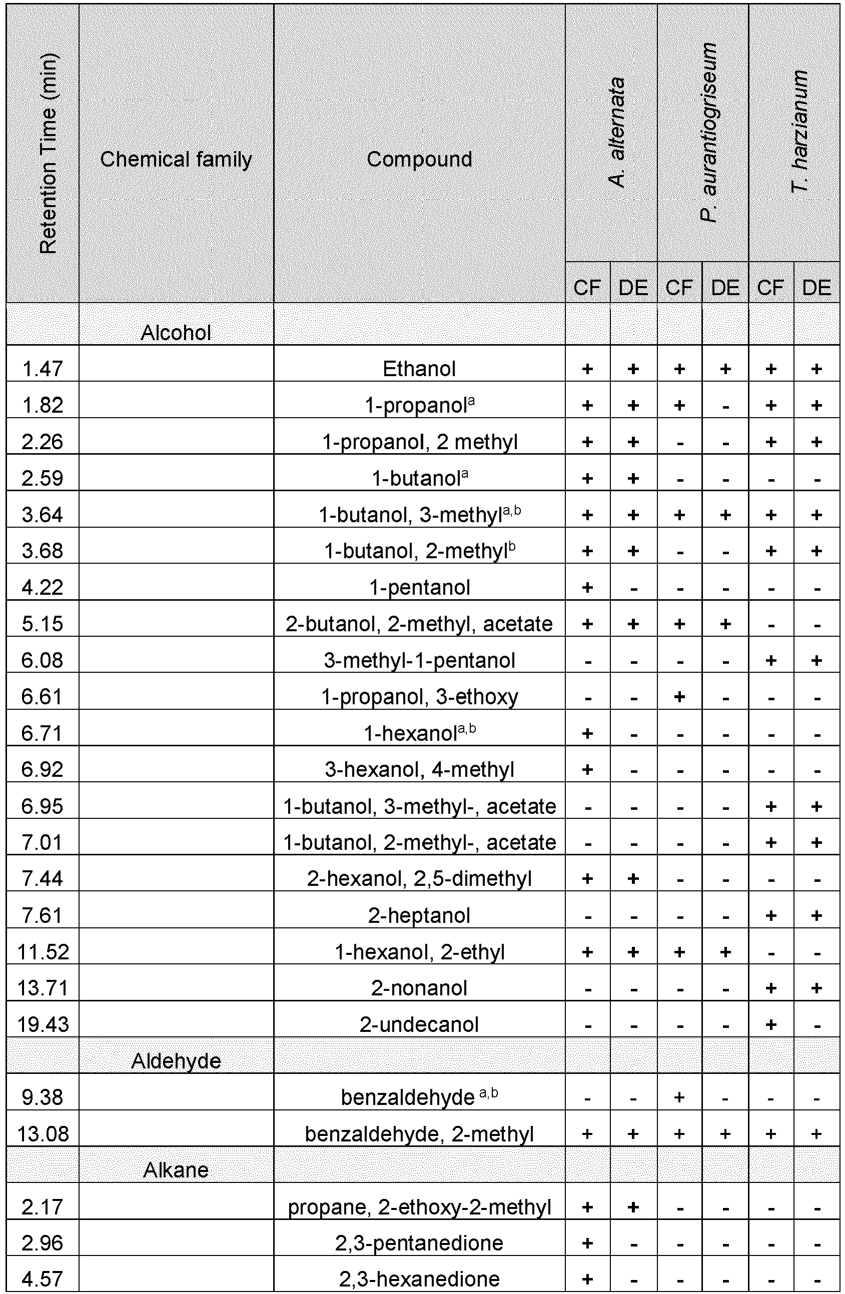

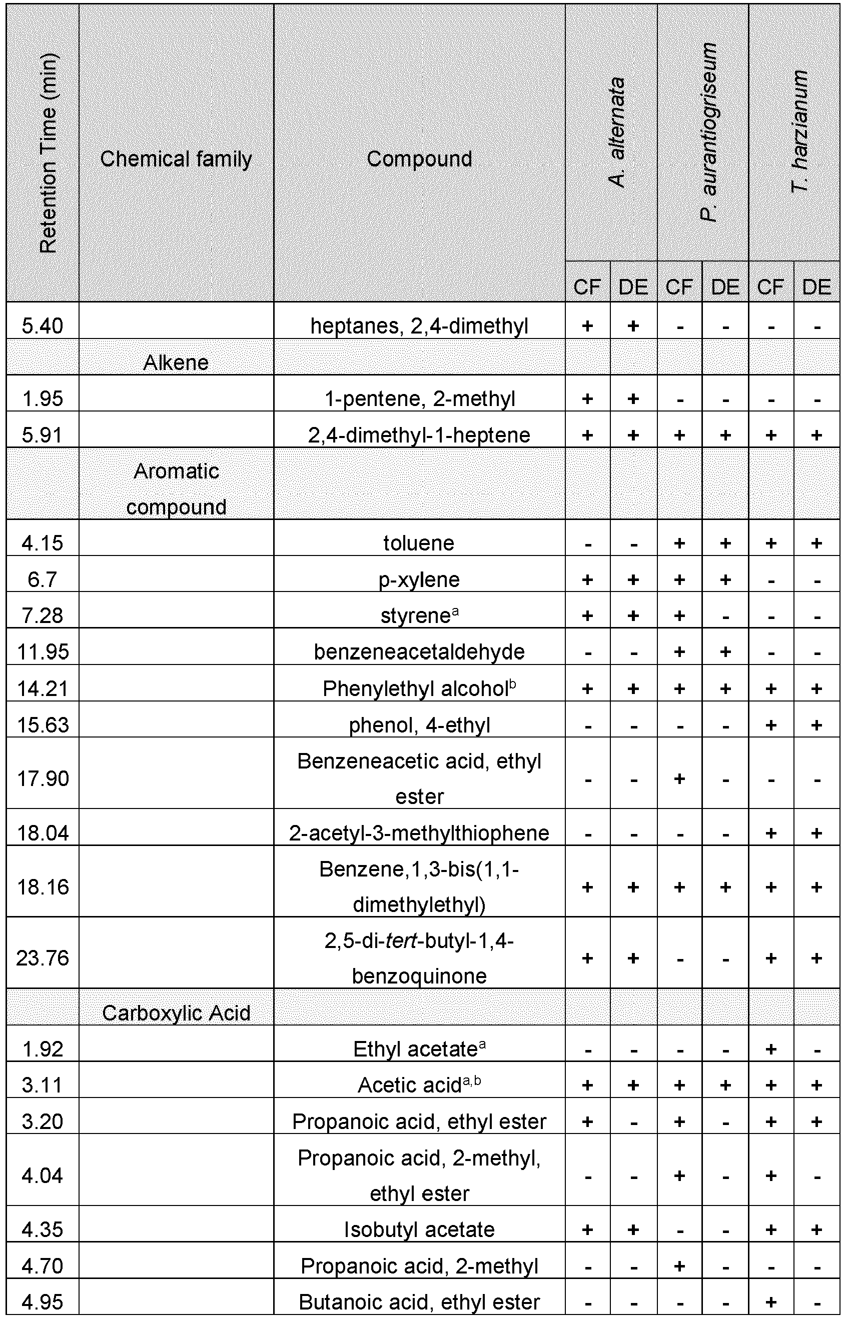

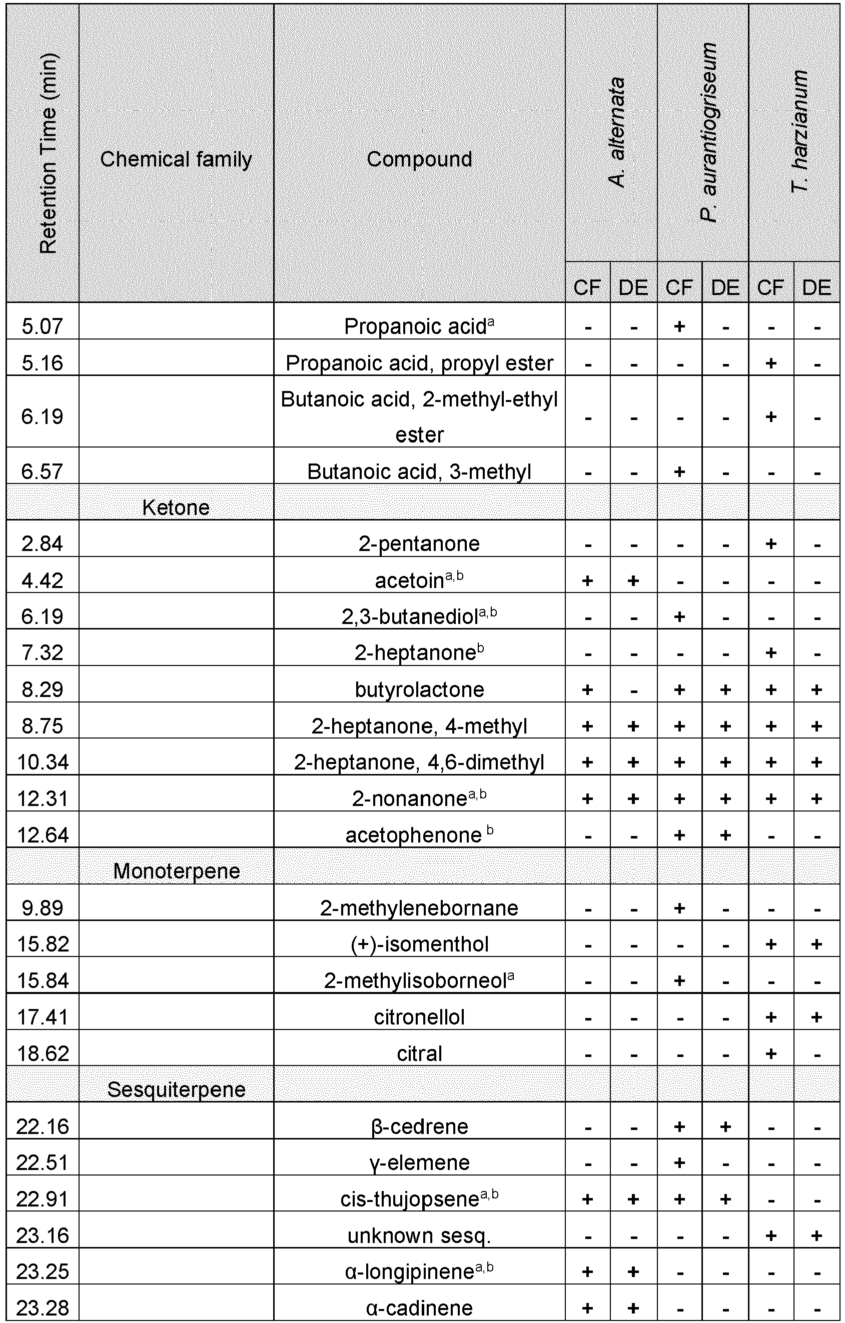

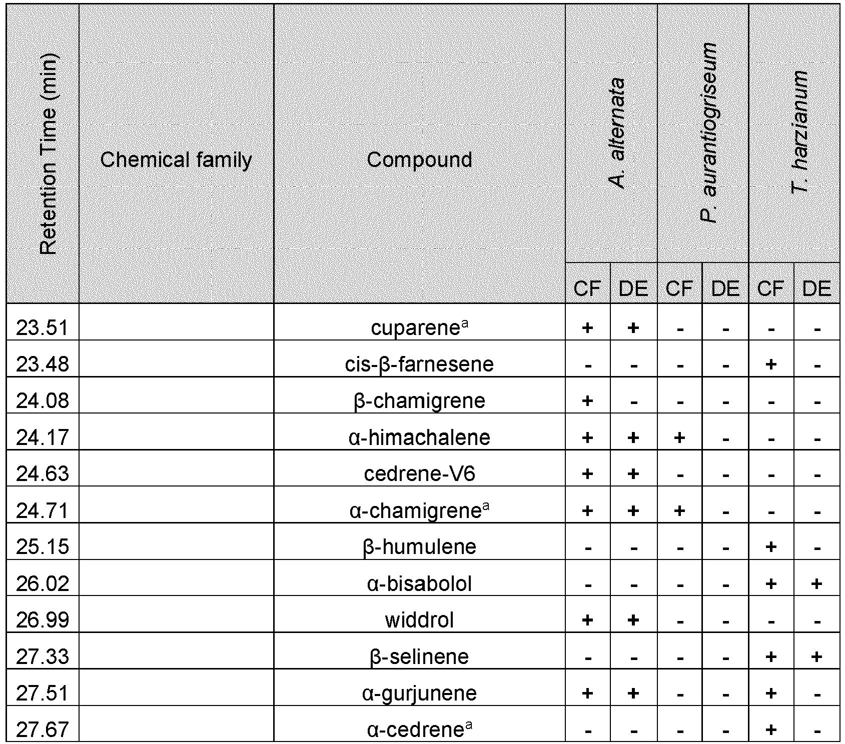

### Impact of the application of the composition of the invention to the soil in the form of CF and DE on the abundance, diversity and microbial composition of indigenous soil

Bacterial 16S rRNA gene amplicon sequencing and analysis on the Illumina MiSeq platform identified a total of 9 phyla, 24 classes, 53 orders, 97 families, 252 genera and 510 species in all the soil samples. The abundance of bacteria in the soils treated with the composition of the invention in the form of CFs and DE of three different fungi was similar to that of the control soils. At the class level, most of the amplicon sequence variants were assigned to *Acidobacteria, Actinobacteria, Chitinophagia, Alphaproteobacteria, Betaproteobacteria* and *Gammaproteobacteria,* representing approximately 50% of all assigned sequences (Figure 1). The application of the composition of the invention significantly altered the composition of the bacterial community in the soil (Figure 1). The most evident changes caused by the treatments were the reduction of the relative abundance of *Alphaproteobacteria* and the increase in the relative abundance of *Betaproteobacteria* and *Gammaproteobacteria* (Figure 1). At the species level, soil application of the composition of the invention reduced bacterial diversity, measured by the Shannon index, and did not affect bacterial richness, measured by the Chao 1 index (Table 3). In general, the different treatments with the composition of the invention strongly enriched the populations of *Bradyrhizobium lupini, Burkholderia arboris, Caballeronia udeis, Paraburkholderia paradisi, Paraburkholderia silvatlantica, Duganella ginsengisoli, Massilia varians, Pseudomonas brassicacearum, Pseudomonas knackmussii, Pseudomonas mediterranea and Rhodanobacter glycinis* (Figure 2), and slightly depleted those of *Paludibaculum fermentans, Cellulosimicrobium funkei, Gaiella occulta, Phenylobacterium lituiforme, Nitrosospira multiformis and Opitutus terrae.*

**Table 3. Bacterial diversity (Shannon index) and richness (Chao index 1) at the species level in the soils treated with CF and DE and in untreated soils. Asterisks indicate statistically significant differences in CF and DE treatments versus controls according to a Student's t-test (P<0.05).**

| | Shannon Index | Chao 1 Index |
|---|---|---|
| CF control | 2.08 ± 0.02 | 1896 ± 97 |
| + *A. alternata* CF | 1.87 ± 0.03* | 2092 ± 104 |
| + *P. aurantiogriseum* CF | 1.96 ± 0.03* | 1988 ± 93 |
| + *T. harzianum* CF | 1.83 ± 0.01* | 1999 ± 58 |
| DE control | 2.28 ± 0.04 | 2067 ± 127 |
| + *A. alternata* DE | 2.15 ± 0.04* | 1990 ± 203 |
| + *P. aurantiogriseum* DE | 2.20 ± 0,005 | 2227 ± 136 |
| + *T. harzianum* DE | 1.91 ± 0.03* | 2391 ± 253 |

Amplicon sequencing analysis of the fungal ITS1-ITS2 gene identified a total of 8 phyla, 18 classes, 25 orders, 34 families, 44 genera and 70 species of fungi in all the soil samples. The abundance of fungi in the soils treated with the composition of the invention was similar to that of the control soils. At the class level, the dominant taxa were *Saccharomycetes, Sordariomycetes* and *Tremellomycetes,* representing 30-70% of all the assigned sequences (Figure 3). The application of the composition of the invention significantly altered the composition of the fungal community in the soil (Figure 3). The greatest changes caused by the treatments with the composition of the invention in the fungal microbiota were the increases in the relative abundances of *Saccharomycetes* and *Sordariomycetes* (Figure 3). At the species level, the treatments reduced fungal diversity and did not affect fungal richness (Table 4). The treatments strongly enriched the populations of *Pseudogymnoascus sp. CCF 5028, Galactomyces candidum, Candida subhashii, Nadsonia starkey-henricii, Cyberlindnera saturnus, Trichoderma harmatum, Mariannaea camptospora, Pseudocosmospora rogersonii and Myxocephala albida,* (Figure 4), and reduced those of the *Penicillium aeneum, P*. *wollemiicola, Geomyces sp. Nankai_19mb, Pichia fermentans, Saccharomyces cerevisiae, Verticillium nubilum and Sordariales sp.* (Figure 4).

**Table 4. Fungal diversity (Shannon index) and richness (Chao index 1) at the species level in the soils treated with CF and DE and in untreated soils. Asterisks indicate statistically significant differences in CF and DE treatments versus controls according to a Student's t-test (P<0.05).**

| | Shannon Index | Chao 1 Index |
|---|---|---|
| CF control | 2.07 ± 0.10 | 418 ± 36 |
| + *A. alternata* CF | 1.57 ± 0.09* | 478 ± 33 |
| + *P. aurantiogriseum* CF | 1.55 ± 0.02* | 429 ± 20 |
| + *T. harzianum* CF | 1.02 ± 0.08* | 355 ± 21 |
| DE control | 2.94 ± 0.20 | 428 ± 34 |
| + *A. alternata* DE | 2.42 ± 0.10* | 444 ± 31 |
| + *P. aurantiogriseum* DE | 2.14 ± 0.06* | 409 ± 14 |
| + *T. harzianum* DE | 1.53 ± 0.07* | 427 ± 17 |

## Claims

1. A use of a composition free of live microorganisms for the modification of the microbiota in a substrate, wherein said composition is obtained by a method comprising the following steps:
a) Cultivating at least one fungus in an appropriate culture medium; and
b) Eliminating or inactivating the fungus from the culture medium of step a) once the growth of the fungus has begun the logarithmic growth phase, to obtain the composition free of living microorganisms.

2. The use, according to claim 1, wherein the composition further comprises at least one acceptable agro-industrial carrier and/or an additive.

3. The use according to any of claims 1 or 2 wherein the fungus is selected from the species: *Alternaria alternata, Penicillium aurantiogriseum, Trichoderma harzianum,* and any of the combinations thereof.

4. The use according to claim 3 wherein the fungus of the A. *alternata* species is the A. *alternata* CECT 20912 strain.

5. The use according to claim 3 wherein the fungus of the *Trichoderma harzianum* species is the *T. harzianum* CECT 2413 strain.

6. The use according to claim 3 wherein the fungus of the P. *aurantiogriseum* species is the P. *aurantiogriseum* CECT20226 strain.

7. The use according to any of claims 1 to 6 wherein the composition is obtained by filtering or distilling the culture of step a).

8. The use according to any of claims 1 to 7 wherein the composition comprises ethanol, 1-propanol, 1-butanol-3-methyl, benzaldehyde-2-methyl, 2,4-dimethyl-1-heptene, 2-phenylethyl alcohol, benzene-1,3-bis(1,1-dimethylethyl), acetic acid, propenoic acid ethyl ester, butyrolactone, 2-heptanone-4-methyl, 2-heptanone-4,6-dimethyl and 2-nonanone.

9. The use according to any of claims 1 to 8, wherein the modification of the microbiota comprises the modification of the growth of one or more bacterial and/or fungal species present in the microbiota compared to a control not treated with the composition.

10. The use according to claim 9 wherein the modification of the growth of bacterial species is selected from the list consisting of: promoting the growth rate, inhibiting growth rate, modifying the morphology of colonies, modifying the physiology, inhibiting the formation of biofilms, promoting the formation of biofilms, and any of the combinations thereof.

11. The use according to claim 9 wherein the modification of the growth of fungal species is selected from the list consisting of: promoting the growth rate, inhibiting growth rate, modifying the morphology of the structure generated by the fungal species, modifying the physiology, and any of the combinations thereof.

12. The use according to any of claims 1 to 8, wherein the modification of the microbiota comprises an increase in abundance of one or more bacterial and/or fungal species present in the microbiota compared to a control not treated with the composition.

13. The use according to any of claims 1 to 8, wherein the modification of the microbiota comprises a reduction in abundance of one or more bacterial and/or fungal species present in the microbiota compared to a control not treated with the composition.

14. The use according to claim 12 wherein the bacterial species are selected from the *Betaproteobacteria* and *Gammaproteobacteria* class.

15. The use according to claim 13 wherein the bacterial species belong to the *Alphaproteobacteria* class.

16. The use according to claim 12 or 14, wherein the bacterial species are selected from the list consisting of: *Bradyrhizobium lupini, Burkholderia arboris, Caballeronia udeis, Paraburkholderia paradisi, Paraburkholderia silvatlantica, Duganella ginsengisoli, Massilia varians, Pseudomonas brassicacearum, Pseudomonas knackmussii, Pseudomonas mediterranea, Rhodanobacter glycinis* and any of the combinations thereof.

17. The use according to claim 13 or 15, wherein the bacterial species are selected from the list consisting of: *Paludibaculum fermentans, Cellulosimicrobium funkei, Gaiella occulta, Phenylobacterium lituiforme, Nitrosospira multiformis, Opitutus terrae* and any of the combinations thereof.

18. The use according to claim 12 wherein the fungal species are selected from the *Saccharomycetes* and *Sordariomycetes* class.

19. The use according to claim 12 or 18, wherein the fungal species are selected from the list consisting of: *Pseudogymnoascus* sp. CCF 5028, *Galactomyces candidum, Candida subhashii, Nadsonia starkey-henricii, Cyberlindnera saturnus, Trichoderma harmatum, Mariannaea camptospora, Pseudocosmospora rogersonii, Myxocephala albida* and any of the combinations thereof.

20. The use according to claim 13, wherein the fungal species are selected from the list consisting of: *Penicillium aeneum, P*. *wollemiicola, Geomyces* sp. *Nankai_19mb, Pichia fermentans, Saccharomyces cerevisiae, Verticillium nubilum, Sordariales* sp. and any of the combinations thereof.

21. The use according to any of claims 13, 15, 17 or 20, wherein the bacterial and/or fungal species are pathogenic species.

22. The use according to claim 21 wherein the pathogenic species are selected from among *Saccharomyces cerevisiae* and *Verticillium nubilum.*

23. The use according to any of claims 1 to 22 wherein the substrate is selected from the list consisting of: soil, industrial sediments, coastal sediments, wastewater, excrement, organic matter, universal substrate, professional substrate, sand, exfoliated vermiculite, expanded perlite and any of the combinations thereof.

24. The use according to claim 23 wherein the substrate is a soil that is selected from the list consisting of: Histosols, Anthrosols, Technosols, Cryosols, Leptosols, Solonetz, Vertisols, Solonchak, Gleysols, Andosols, Podzols, Plinthosols, Nitisols, Ferralsols, Planosols, Stagnosols, Chernozems, Kastanozems, Phaeozems, Umbrisols, Durisols, Gypsisols, Calcisols, Retisols, Acrisols, Lixisols, Alisols, Luvisols, Cambisols, Arenosols, Fluvisols, Regosols and any of the combinations thereof.

25. The use according to any of claims 1 to 24 wherein the substrate is a cultivated soil or a non-cultivated soil.

26. The use according to any of claims 1 to 25 wherein the substrate is the rhizosphere of the soil.

27. The use according to any of claims 1 to 26, wherein the substrate is a soil **characterised in that** it has at least one property that is selected from the list consisting of: low humidity, high salt content, high acidity, low nutrient content, low porosity, high water content, low stability, high content of surface organic matter, low humus content and any of the combinations thereof.

28. The use according to claim 23 wherein the substrate is silt, solid slurry or liquid slurry.

29. The use according to any of claims 1 to 28, wherein the substrate is **characterised in that** it has high concentrations of at least one compound selected from the list consisting of: lead, mercury, arsenic, copper, zinc, nickel, polyaromatic hydrocarbons, herbicides, insecticides and any of the combinations thereof.

30. The use according to claim 23 wherein the substrate is organic matter of the soil.

31. The use according to any of claims 1 to 30, wherein the substrate is **characterised in that** it is infected by pathogenic bacterial and/or fungal species.

32. The use according to any of claims 1 to 31 wherein the composition is applied to the substrate by irrigation, immersion, spraying, evaporation, nebulisation and/or dispersion.

33. The use according to any of claims 1 to 32 wherein the composition is used in an effective dose.
